# EUROPÄISCHE PATENTSCHRIFT

(11) **EP 2 721 621 B1**
(45) Veröffentlichungstag und Bekanntmachung des Hinweises auf die Patenterteilung: **18.07.2018**
(21) Anmeldenummer: 12724570.2
(22) Anmeldetag: 15.05.2012
(51) Int. Cl.: H01G 4/232, H01G 4/32, H01G 2/00, H01R 4/26

(54) **KONTAKTTEIL ZUR ELEKTRISCHEN VERBINDUNG VON STIRNKONTAKTSCHICHTEN AUF DEN STIRNSEITEN EINES KUNSTSTOFFFOLIEN-KONDENSATORWICKELS EINES EIN- ODER DREIPHASIGEN ELEKTRISCHEN BECHERKONDENSATORS SOWIE EIN- UND DREIPHASIGE ELEKTRISCHE BECHERKONDENSATOREN MIT DEMSELBEN**
CONTACT PART FOR ELECTRICALLY CONNECTING END-FACE CONTACT LAYERS ON THE END FACES OF A PLASTIC FILM CAPACITOR WINDING OF AN ENCASED ELECTRIC SINGLE-PHASE OR THREE-PHASE CAPACITOR, AND ENCASED ELECTRIC SINGLE-PHASE AND THREE-PHASE CAPACITORS COMPRISING SAME
ÉLÉMENT DE CONTACT POUR RELIER ÉLECTRIQUEMENT DES COUCHES DE CONTACT FRONTALES SUR LES FACES FRONTALES D'UN BOBINAGE CAPACITIF EN FILM PLASTIQUE D'UN CONDENSATEUR ÉLECTRIQUE MONO- OU TRIPHASÉ EN BOÎTIER, ET CONDENSATEUR ÉLECTRIQUE MONO- OU TRIPHASÉ EN BOÎTIER ÉQUIPÉ D'UN TEL ÉLÉMENT

(30) Priorität: 15.06.2011 DE 102011104255
(43) Veröffentlichungstag der Anmeldung: 23.04.2014
(73) Patentinhaber: FRAKO Kondensatoren- und Anlagenbau GmbH, 79331 Teningen (DE)
(72) Erfinder: REINBOLD, Hans Georg, 79350 Sexau (DE)
(74) Vertreter: Manasse, Uwe
(86) Internationale Anmeldenummer: PCT/EP2012/002083
(87) Internationale Veröffentlichungsnummer: WO 2012/171605

(56) Entgegenhaltungen:
- DE-B3-102005 045 978
- DE-C1- 19 538 725
- US-A- 3 881 799
- US-A- 4 242 717

## Beschreibung

Die vorliegende Erfindung betrifft ein Kontaktteil zur elektrischen Verbindung von Stirnkontaktschichten auf den Stirnseiten eines Kunststofffolien-Kondensatorwickels eines ein- oder dreiphasigen elektrischen Becherkondensators mit einem Anschlussdraht oder einem Verbindungsdraht sowie einen einphasigen elektrischen Becherkondensator gemäß dem Oberbegriff von Anspruch 11 und einen dreiphasigen elektrischen Becherkondensator gemäß dem Oberbegriff von Anspruch 12.

Beispielsweise in der DE 10 2005 045 978 B3 sind ein- und dreiphasige elektrische Becherkondensatoren der eingangsgenannten Art gezeigt. Zur Herstellung derselben werden Kondensatorwickel aus metallisch bedampfter Polypropylenfolie auf beiden Stirnseiten mit Metall, üblicherweise Zink, bespritzt. Die resultierenden Stirnkontaktschichten (Kontaktflächen) werden mittels Lötstellen mit den Verbindungs- und Anschlussdrähten verbunden. Die Verbindungs- und Anschlussdrähte bestehen meistens aus Kupfer. Einige sind auch oberflächenverzinnt und somit an sich sehr gut zu löten. Die Stirnkontaktschichten aus Zink der Kondensatorwickel lassen sich jedoch nur sehr schwierig löten. Die Folge hiervon ist, dass man eine erhebliche Wärmezufuhr mit relativ hohen Löttemperaturen benötigt. Sehr aggressive Flussmittel und nach Möglichkeit bleihaltiges Lot sind für ein gutes Lötergebnis notwendig. Außerdem benötigt man gut geschultes Personal, um gleichbleibend gute Lötungen zu erzielen.

Der Erfindung liegt somit die Aufgabe zugrunde, eine einfachere und damit kostengünstigere Herstellung von ein- und dreiphasigen elektrischen Becherkondensatoren zu ermöglichen.

Die US 4 242 717 A offenbart ein Kontaktteil zur elektrischen Verbindung von Stirnkontaktschichten auf den Stirnseiten eines Kunstofffolien-Kondensatorwickels eines einphasigen elektrischen Becherkondensators mit einem Anschlussdraht oder einem Verbindungsdraht, umfassend einen ebenen Kontaktträger mit einem Anschlussbereich zur Kontaktierung eines Anschlussdrahtes oder eines Verbindungsdrahtes, ein sich von dem Kontaktträger im Wesentlichen senkrecht nach oben erstreckendes Kontaktstück mit einer Kontaktspitze zum Herstellen einer elektrischen Verbindung zu einer Stirnkontaktschicht durch Eindrücken der Kontaktspitze in dieselbe und eine Eindringtiefenbegrenzungseinrichtung zur Begrenzung der Eindringtiefe der Kontaktspitze in der Stirnkontaktschicht. Die Anschlussbereiche sorgen durch ihre Position an den Anschlussstücken für eine Begrenzung der Eindringtiefe sowohl vertikal als auch horizontal.

Die US 3 881 799 A offenbart ein konusförmiges Kontaktstück mit abgerundeter Spitze und Dimensionen im µm-Bereich.

Erfindungsgemäß wird diese Aufgabe gelöst durch ein Kontaktteil gemäß Anspruch 1. Bei dem Anschlussdraht bzw. Verbindungsdraht kann es sich ganz allgemein um einen Anschlussleiter bzw. Verbindungsleiter, z. B. aus Litze, handeln.

Weiterhin wird diese Aufgabe gelöst durch einen einphasigen elektrischen Becherkondensator gemäß Anspruch 7 .

Zudem wird diese Aufgabe gelöst durch einen dreiphasigen elektrischen Becherkondensator gemäß Anspruch 8.

Gemäß einer besonderen Ausführungsform des Kontaktteils erstreckt sich mindestens ein Kontaktstück von dem Kontaktträger im wesentlichen senkrecht nach oben und sich mindestens ein Kontaktstück von dem Kontaktträger im wesentlichen senkrecht nach unten.

Günstigerweise sind mehrere Kontaktstücke vorzugsweise äquidistant am Außenrand des ringförmigen Kontaktträgers vorgesehen und erstrecken sich einheitlich davon im wesentlichen senkrecht nach oben oder nach unten.

Günstigerweise ist das Grundmaterial des Kontaktteils, vorzugsweise elektrisch gut leitendes, Metall, vorzugsweise Messing oder Kupfer. Es ist aber auch beispielsweise Federstahl oder ganz allgemein elektrisch leitendes Material, wie zum Beispiel elektrisch leitfähiger Kunststoff, denkbar.

Vorteilhafterweise weist das Grundmaterial einen Zinnüberzug auf.

Günstigerweise ist bei dem dreiphasigen elektrischen Becherkondensator auf den Stirnseiten der obersten und untersten Kondensatorwickel jeweils eines der Kontaktteile vorgesehen und zwischen den Kondensatorwickeln jeweils eines der Kontaktteile zum Kontaktieren jeweils beider benachbarter Stirnkontaktschichten vorgesehen sowie ist ein Verbindungsdraht zur elektrischen Verbindung des obersten Kontaktteils mit dem untersten Kontaktteil vorgesehen. Auf den obersten und untersten Kondensatorwickeln kann jeweils ein Kontaktteil mit einseitig vorstehenden, und zwar zur jeweiligen Stirnkontaktschicht, Kontaktstücken vorgesehen sein, während zwischen den Kondensatorwickeln Kontaktteile mit jeweils beidseitig vorstehenden Kontaktstücken vorgesehen werden sollten. Selbstverständlich macht dann auch eine entsprechende Anordnung von Auflagestücken Sinn.

Günstigerweise ist bei dem dreiphasigen elektrischen Becherkondensator der Verbindungsdraht mit dem obersten und untersten Kontaktteilen durch Punktschweißung, Crimpen oder Löten elektrisch verbunden.

Gemäß einer besonderen Ausführungsform der Becherkondensatoren sind die Kontaktteile in die jeweilige Stirnkontaktschicht zumindest teilweise eingedrückt. Beispielsweise können nach dem Einbau der Kondensatorwickel oder Kondensatorwickelsäule in das Gehäuse die Kontaktspitzen mit entsprechendem Einpressdruck in die Stirnkontaktschicht(en) eingedrückt werden. Die Druckkraft kann aufrechterhalten werden, bis der Haltering oder die Haltesicke auf Position gebracht ist. Somit bleiben die Kontaktspitzen in eingedrückter Position.

Vorteilhafterweise sind die Anschlussdrähte mit dem jeweiligen Kontaktteil durch Punktschweißung, Crimpen oder Löten elektrisch verbunden.

Gemäß einer weiteren besonderen Ausführungsform der Erfindung sind die Kunststofffolien-Kondensatorwickel aus mit einer Metallschicht versehenen Kunststofffolien, insbesondere metallisch bedampften Polypropylenfolien, hergestellt.

Schließlich kann alternativ vorgesehen sein, dass die Kunststofffolien-Kondensatorwickel aus durch eine Kunststofffolie voneinander isolierten Metallfolien hergestellt sind.

Der Erfindung liegt die überraschende Erkenntnis zugrunde, dass durch die lötfreie elektrische Verbindung mit den Stirnkontaktschichten die elektrischen Becherkondensatoren einfacher und damit kostengünstiger herstellbar sind. Beispielsweise bei einem dreiphasigen elektrischen Becherkondensator, d. h. mit drei Kondensatorwickeln, fallen insgesamt neun kritische Lötungen und zwei Verbindungsdrähte weg. Außerdem ist die Qualität der elektrischen Verbindung langlebiger, weil die Folien nicht mehr durch die Hitze beim Lötvorgang beschädigt und somit die elektrische Verbindung zwischen der Folienbedampfung und den Stirnkontaktschichten nicht geschwächt wird, und gibt es geringere Qualitätsschwankungen, da die Herstellung unter Einsatz eines genau einstellbaren Drucks zum Eindrücken bzw. Einpressen der Kontaktteile in die Stirnkontaktschichten möglich ist. Zudem ist eine Automatisierung der Herstellung der Becherkondensatoren (Leistungskondensatoren) oder eines Teils davon leichter möglich.

Weitere Merkmale und Vorteile der Erfindung ergeben sich aus den beigefügten Ansprüchen und der nachfolgenden Beschreibung, in der:
- Figur 1: eine Längsschnittansicht von einem einphasigen elektrischen Becherkondensator gemäß einer besonderen Ausführungsform der Erfindung in einem Herstellstadium;
- Figur 2: eine Längsschnittansicht von dem Becherkondensator von Figur 1 während eines späteren Herstellstadiums;
- Figur 3: eine Längsschnittansicht von einem dreiphasigen elektrischen Becherkondensator gemäß einer besonderen Ausführungsform der Erfindung in einem Herstellstadium;
- Figur 4: eine Längsschnittansicht von dem Becherkondensator von Figur 3 während eines späteren Herstellstadiums;
- Figur 5: eine Seitenansicht (oben) und eine Draufsicht von oben (unten) von einem Kontaktteil gemäß einer besonderen Ausführungsform der Erfindung; und
- Figur 6: eine Seitenansicht (oben) und eine Draufsicht von oben (unten) von einem Kontaktteil gemäß einer weiteren besonderen Ausführungsform der Erfindung.

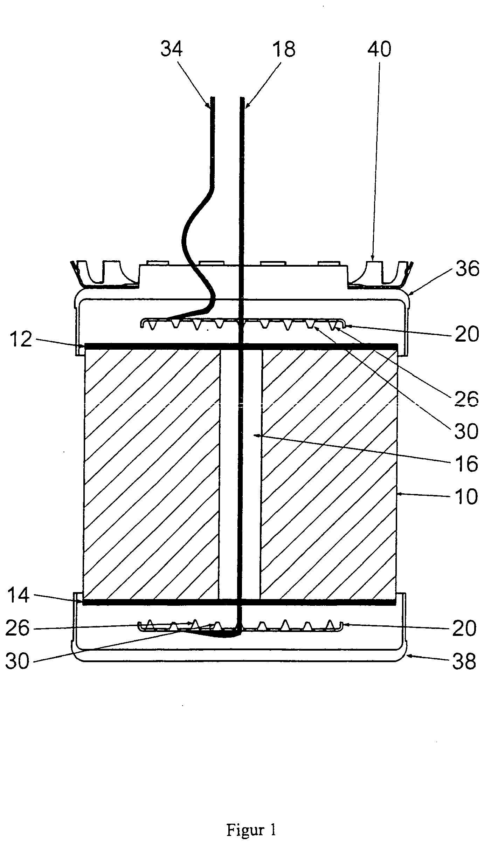

Figur 1 zeigt einen Kunststofffolien-Kondensatorwickel 10, dessen Stirnseiten jeweils mit einer Stirnkontaktschicht 12 bzw. 14 beispielsweise aus Zink versehen sind. Durch den hohlen Kondensatorwickelkern 16 erstreckt sich ein Anschlussdraht 18 von oben nach unten. Das obere Ende des Anschlussdrahtes 18 ist nach Herstellung eines einphasigen elektrischen Becherkondensators mit besagtem Kunststofffolien-Kondensatorwickel 10 durch einen Gehäusedeckel geführt.

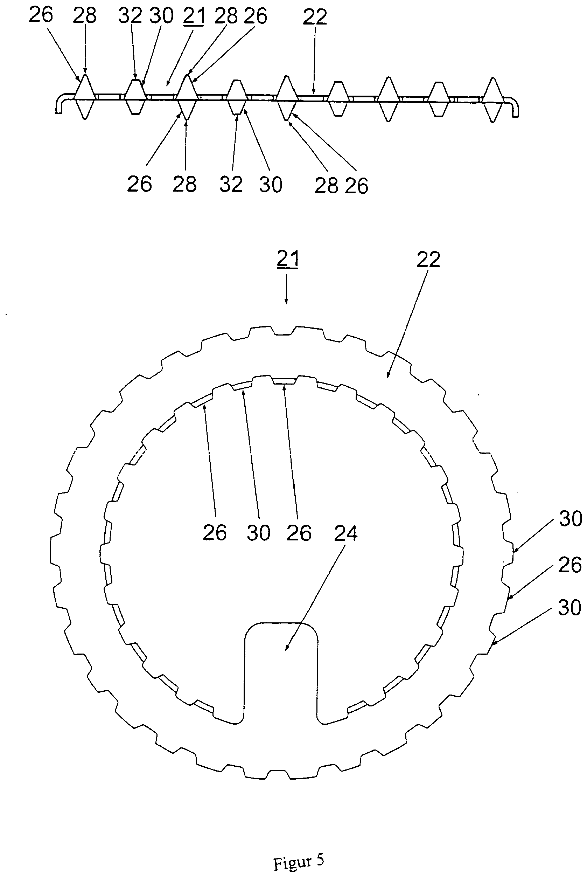

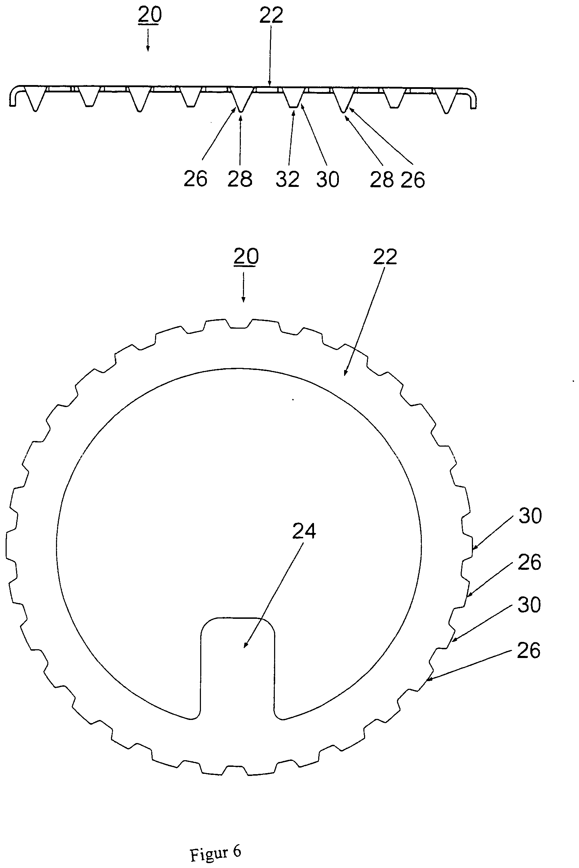

Das untere Ende des Anschlussdrahtes 18 ist mit einem in Figur 6 gezeigten Kontaktteil 20 durch Punktschweißung, Crimpen oder Löten elektrisch verbunden. Wie sich anhand der Figur 6 ergibt, weist das Kontaktteil 20 einen im Wesentlichen ringförmigen flachen Kontaktträger 22 und eine sich von dem Kontaktträger 22 in derselben Ebene nach innen erstreckende Anschlussfahne 24 auf. Am Außenrand sind umlaufend äquidistant abwechselnd Kontaktstücke 26 mit jeweils einer Kontaktspitze 28 und Auflagestücke 30 mit Auflageflächen 32 angeordnet, von denen nur einige gekennzeichnet sind. Die Auflagestücke stehen jeweils weniger weit vor als die Kontaktstücke. Das in der Figur 5 gezeigte Kontaktteil 21 unterscheidet sich von demjenigen 20 von Figur 6 darin, dass die Kontaktstücke 26 und Auflagestücke 30 nicht einseitig, sondern beidseitig vorgesehen sind. Am Außenrand erstrecken sich sowohl die Kontaktstücke 26 als auch die Auflagestücke 30 nach unten, während sich am Innenrand die Kontaktstücke 26 und die Auflagestücke 30 nach oben erstrecken.

In Figur 1 ist das in der Figur 6 gezeigte Kontaktteil 20 so angeordnet, dass die Kontaktstücke 26 und Auflagestücke 30 nach oben, d. h. zur Stirnkontaktschicht 14 zeigen.

Oberhalb der oberen Stirnkontaktschicht 12 ist ebenfalls ein Kontaktteil 20 gemäß Figur 6, aber mit nach unten vorstehenden Kontaktstücken 26 und Auflagestücken 30 angeordnet. Dies ist durch Punktschweißung, Crimpen oder Löten mit einem weiteren Anschlussdraht 34 elektrisch verbunden.

Desweiteren ist von oben sowie von unten bereits jeweils eine obere Isolierkappe 36 bzw. eine unter Isolierkappe 38 aufgesetzt. Zudem ist auf der oberen Isolierkappe 36 bereits ein Haltering 40 angeordnet.

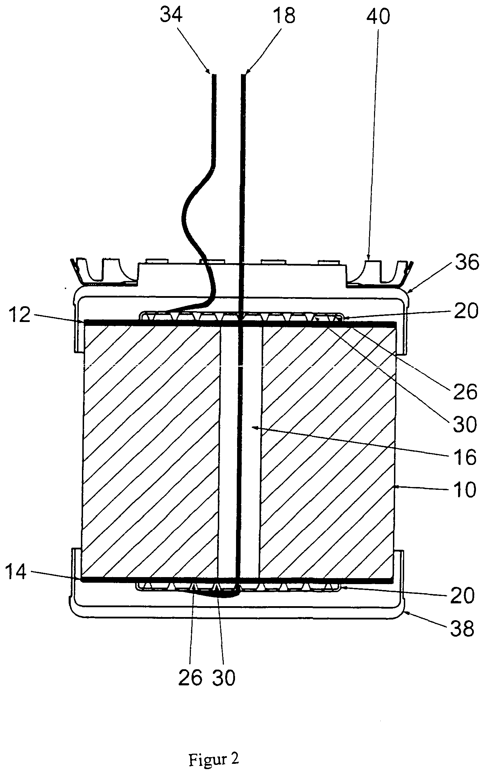

In Figur 2 sind das obere Kontaktteil 20 und das untere Kontaktteil 20 bereits gegen die jeweilige Stirnkontaktschicht 12 bzw. 14 gedrückt, und zwar in der Form, dass die Kontaktspitzen 28 in die Stirnkontaktschichten 12 bzw. 14 eingedrückt sind und somit eine elektrische Verbindung erzielt wird. Wie ein Vergleich der Figuren 1 und 2 ergibt, sind die Isolierkappen 36 und 38 in Figur 2 nicht nur aufgesetzt, sondern vollständig auf den Kunststofffolien-Kondensatorwickel geschoben. Das Eindrücken kann beim Einbau des Kunststofffolien-Kondensatorwickels 10 in ein Gehäuse (nicht gezeigt) durch entsprechende Druckkraft auf die obere Isolierkappe 36 und die untere Isolierkappe 38 erfolgen. Üblicherweise ist auch noch eine Mantelisolation (nicht gezeigt) vorgesehen.

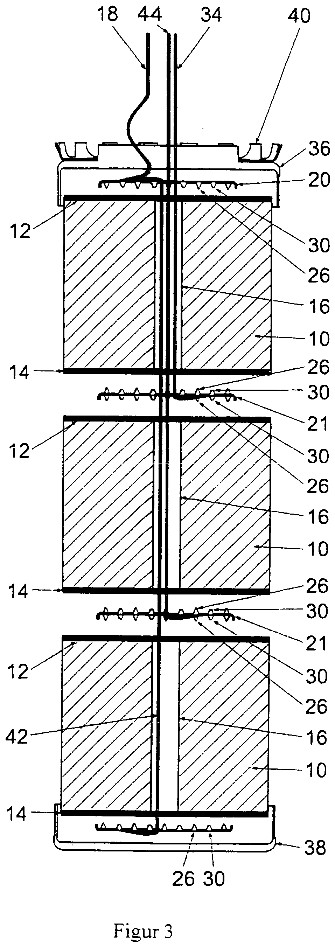

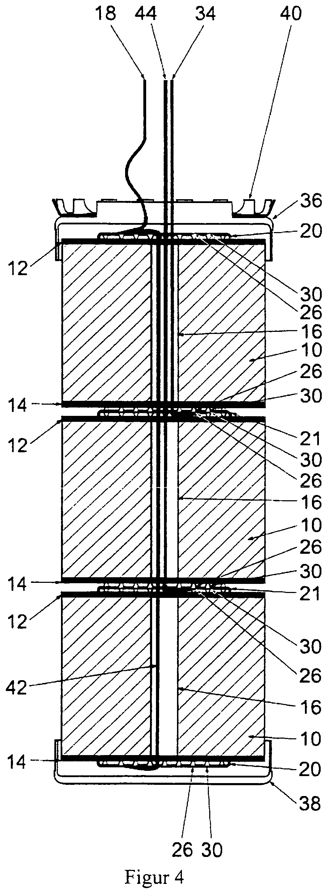

Die Figuren 3 und 4 zeigen entsprechendes für einen dreiphasigen elektrischen Becherkondensator. Zur Herstellung eines dreiphasigen elektrischen Becherkondensators werden drei Kunststofffolien-Kondensatorwickel 10 säulenartig übereinander angeordnet. Oberhalb der oberen Stirnkontaktschicht 12 des obersten Kunststofffolien-Kondensatorwickels 10 ist ein Kontaktteil 20 gemäß Figur 6 mit nach unten vorstehenden Kontaktstücken 26 und Auflagestücken 30 und unterhalb der unteren Stirnkontaktschicht 14 des untersten Kunststofffolien-Kondensatorwickels 10 ein Kontaktteil 20 gemäß Figur 6 mit nach oben vorstehenden Kontaktstücken 26 und Auflagestücken 30 angeordnet. Zwischen dem obersten Kunststofffolien-Kondensatorwickel 10 und dem mittleren Kunststofffolien-Kondensatorwickel 10 ist ein Kontaktteil 21 gemäß Figur 5 angeordnet und zwischen dem mittleren Kunststofffolien-Kondensatorwickel 10 und dem untersten Kunststofffolien-Kondensatorwickel 10 ist ebenfalls ein Kontaktteil 21 gemäß Figur 5 angeordnet. Das oberste Kontaktteil 20 ist durch Punktschweißung, Crimpen oder Löten mit einem Anschlussdraht 18 elektrisch verbunden. Desweiteren erstreckt sich ein Verbindungsdraht 42 durch die Kondensatorwickelkerne 16 der drei Kunststofffolien-Kondensatorwickel von dem obersten Kontaktteil 20 zum untersten Kontaktteil 20. Der Verbindungsdraht 42 ist sowohl mit dem obersten Kontaktteil 20 als auch mit dem untersten Kontaktteil 20 jeweils durch Punktschweißung, Crimpen oder Löten elektrisch verbunden.

Ein Anschlussdraht 20 erstreckt sich von oben durch den hohlen Kondensatorwickelkern 16 des obersten Kunststofffolien-Kondensatorwickels 10 zum zwischen dem obersten Kunststofffolien-Kondensatorwickel 10 und dem mittleren Kunststofffolien-Kondensatorwickel 10 angeordneten Kontaktteil 21 und ist damit durch Punktschweißung, Crimpen oder Löten elektrisch verbunden.

Schließlich erstreckt sich ein Anschlussdraht 44 von oben durch den hohlen Kondensatorwickelkern 16 des obersten Kunststofffolien-Kondensatorwickels 10 und des mittleren Kunststofffolien-Kondensatorwickels 10 zum zwischen dem mittleren Kunststofffolien-Kondensatorwickel 10 und dem untersten Kunststofffolien-Kondensatorwickel 10 angeordneten Kontaktteil 21. Mit diesem ist der Anschlussdraht 44 durch Punktschweißung, Crimpen oder Löten elektrisch verbunden.

Genau wie bei der in den Figuren 1 und 2 gezeigten Ausführungsform sind zu oberst und zu unterst eine obere Isolierkappe 36 bzw. eine untere Isolierkappe 38 aufgesetzt, wobei auf der oberen Isolierkappe 36 auch noch ein Haltering 40 angeordnet ist. Ebenfalls genau wie die bei der in den Figuren 1 und 2 gezeigten Ausführungsform können die Kontaktspitzen 28 durch weiteres Schieben der oberen und unteren Isolierkappen 36 und 38 auf die Kunststofffolien-Kondensatorwickel 10 durch entsprechende Druckkraft beispielsweise beim Einbau in ein Gehäuse (nicht gezeigt) in die jeweiligen Stirnkontaktschichten 12 und 14 eingedrückt werden. In beiden Ausführungsformen können die Kunststofffolien-Kondensatorwickel 10 und Kontaktteile 20 durch den Haltering 40 oder eine Haltesicke auf Position gehalten werden und kann somit eine dauerhafte elektrische Verbindung sichergestellt werden.

Durch die Auflagestücke 30 und die Auflageflächen 32 wird die Eindringtiefe bei der Montage begrenzt, um eine Schädigung der Kunststofffolie zu verhindern.

Die Grundform der Kontaktteile 20 und 21 kann in verschiedenster Geometrie ausgebildet sein, wobei jedoch aufgrund der runden Form der Kondensatorwickel eine ringförmige Geometrie besonders geeignet erscheint.

Die Kontaktteile 20 und 21 können Stanzteile sein. Je nach Einsatzzweck können die Kontaktstücke 26 nur zu einer Seite oder aber zu beiden Seite aus dem Stanzteil gebogen werden. Bei der beidseitigen Ausführung können zwei zusammenliegende Kontaktschichten (Wickelbrücken) zu einer Wickelsäule ohne zusätzliche metallische Verbindung elektrisch zusammengeschaltet werden. Als Grundmaterial für die Kontaktteile wird elektrisch gut leitendes Metall bevorzugt, insbesondere Messing oder Kupfer. Zur besseren Kontaktierung ist ein Zinnüberzug von Vorteil, aber nicht zwingend erforderlich.

Durch die vorangehend gezeigten Kontaktierungen entfallen die zeitaufwendigen und schwierigen Lötungen direkt an den Stirnkontaktschichten (Wickelbrücken). Die Größe der Kontaktteile richtet sich nach der Größe und Leistung der Kondensatorwickel und der Fläche der Stirnkontaktschichten.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Kunststofffolien-Kondensatorwickel
- 12, 14: Stirnkontaktschichten
- 16: Kondensatorwickelkerne
- 18: Anschlussdraht
- 20: Kontaktteile
- 21: Kontaktteile
- 22: Kontaktträger
- 24: Anschlussfahne
- 26: Kontaktstücke
- 28: Kontaktspitzen
- 30: Auflagestücke
- 32: Auflageflächen
- 34: Anschlussdraht
- 36: obere Isolierkappe
- 38: untere Isolierkappe
- 40: Haltering
- 42: Verbindungsdraht
- 44: Anschlussdraht

## Patentansprüche

1. Kontaktteil (20, 21) zur elektrischen Verbindung von Stirnkontaktschichten (12, 14) auf den Stirnseiten eines Kunststofffolien-Kondensatorwickels (10) eines ein- oder dreiphasigen elektrischen Becherkondensators mit einem Anschlussdraht (18, 34, 44) oder einem Verbindungsdraht (42), umfassend
- einen vorzugsweise ebenen ringförmigen Kontaktträger (22) mit einem Anschlussbereich zur Kontaktierung eines Anschlussdrahtes (18, 34, 44) oder eines Verbindungsdrahtes (42), wobei der Anschlussbereich eine Anschlussfahne (24) vorzugsweise in der Ebene des Kontaktträgers (22) ist,
- mindestens ein sich von dem Kontaktträger (22) im Wesentlichen senkrecht nach oben oder nach unten erstreckendes Kontaktstück (26) mit mindestens einer Kontaktspitze (28) zum Herstellen einer elektrischen Verbindung zu einer Stirnkontaktschicht (12, 14) durch Eindrücken der Kontaktspitze (28) in dieselbe und
- eine Eindringtiefenbegrenzungseinrichtung zur Begrenzung der Eindringtiefe der Kontaktspitze (28) bzw. der Kontaktspitzen (28) in der Stirnkontaktschicht (12, 14), wobei die Eindringtiefenbegrenzungseinrichtung mehrere Auflagestücke (30) mit Auflageflächen (32) aufweist, ferner wobei die Auflagestücke (30) oder ein Teil derselben vorzugsweise äquidistant am Außenrand des ringförmigen Kontaktträgers (22) vorgesehen sind und sich einheitlich davon im Wesentlichen senkrecht nach oben und/oder nach unten erstrecken oder wobei die Auflagestücke (30) oder ein Teil derselben vorzugsweise äquidistant am Innenrand des ringförmigen Kontaktträgers (22) vorgesehen sind und sich einheitlich davon im Wesentlichen senkrecht nach oben und/oder nach unten erstrecken.

2. Kontaktteil (20) nach Anspruch 1, **dadurch gekennzeichnet, dass** sich mindestens ein Kontaktstück (26) von dem Kontaktträger (22) im Wesentlichen senkrecht nach oben und sich mindestens ein Kontaktstück (26) von dem Kontaktträger (22) im Wesentlichen senkrecht nach unten erstreckt.

3. Kontaktteil (20) nach Anspruch 1 oder 2, **dadurch gekennzeichnet, dass** mehrere Kontaktstücke (26) vorzugsweise äquidistant am Außenrand des ringförmigen Kontaktträgers (22) vorgesehen sind und sich einheitlich davon im Wesentlichen senkrecht nach oben oder nach unten erstrecken.

4. Kontaktteil (20, 21) nach Anspruch 1 bis 3, **dadurch gekennzeichnet, dass** mehrere Kontaktstücke (26) vorzugsweise äquidistant am Innenrand des ringförmigen Kontaktträgers (22) vorgesehen sind und sich einheitlich davon senkrecht nach unten oder nach oben erstrecken.

5. Kontaktteil (20, 21) nach einem der vorangehenden Ansprüche, **dadurch gekennzeichnet, dass** sein Grundmaterial, vorzugsweise elektrisch gut leitendes, Metall, vorzugsweise Messing oder Kupfer, ist.

6. Kontaktteil (20, 21) nach Anspruch 5, **dadurch gekennzeichnet, dass** das Grundmaterial einen Zinnüberzug aufweist.

7. Einphasiger elektrischer Becherkondensator mit einem Gehäuse, einem Gehäusedeckel, einem in dem Gehäuse angeordneten Kunststofffolien-Kondensatorwickel (10), dessen Stirnseiten jeweils mit einer Stirnkontaktschicht (12, 14) versehen sind, und zwei durch den Gehäusedeckel geführten Anschlussdrähten (18, 34),
**dadurch gekennzeichnet, dass**
die Anschlussdrähte (18, 34) über ein jeweiliges Kontaktteil (20) nach einem der vorangehenden Ansprüche mit den Stirnkontaktschichten (12, 14) elektrisch verbunden sind, wobei die Kontaktteile (20) mit der jeweiligen Stirnkontaktschicht (12, 14) lötfrei elektrisch verbunden sind.

8. Dreiphasiger elektrischer Becherkondensator mit einem Gehäuse, einem Gehäusedeckel, drei in dem Gehäuse übereinander angeordneten im Dreieck verschalteten Kunststofffolien-Kondensatorwickeln (10), deren Stirnseiten jeweils mit einer Stirnkontaktschicht (12, 14) versehen sind, und drei durch den Gehäusedeckel geführten Anschlussdrähten (18, 34, 44),
**dadurch gekennzeichnet, dass**
die Anschlussdrähte (18, 34, 44) über ein jeweiliges Kontaktteil (20, 21) nach einem der Ansprüche 1 bis 6 mit der entsprechenden Stirnkontaktschicht (12, 14) der Kondensatorwickel (10) elektrisch verbunden sind, wobei die Kontaktteile (20, 21) mit der jeweiligen entsprechenden Stirnkontaktschicht (12, 14) lötfrei elektrisch verbunden sind.

9. Becherkondensator nach Anspruch 8, **dadurch gekennzeichnet, dass** auf den Stirnseiten der obersten und untersten Kondensatorwickel jeweils eines (20) der Kontaktteile (20, 21) vorgesehen ist und zwischen den Kondensatorwickeln jeweils eines (21) der Kontaktteile (20, 21) zum Kontaktieren jeweils beider benachbarter Stirnkontaktschichten (12, 14) vorgesehen ist sowie ein Verbindungsdraht (42) zur elektrischen Verbindung des obersten Kontaktteils (20) mit dem untersten Kontaktteil (20) vorgesehen ist.

10. Becherkondensator nach Anspruch 9, **dadurch gekennzeichnet, dass** der Verbindungsdraht (42) mit den obersten und untersten Kontaktteilen (20, 20) durch Punktschweißung, Crimpen oder Löten elektrisch verbunden ist.

11. Becherkondensator nach einem der Ansprüche 7 bis 10, **dadurch gekennzeichnet, dass** die Kontaktteile (20, 21) in die jeweilige Stirnkontaktschicht (12, 14) zumindest teilweise eingedrückt sind.

12. Becherkondensator nach einem der Ansprüche 7 bis 11, **dadurch gekennzeichnet, dass** die Anschlussdrähte (18, 34, 44) mit dem jeweiligen Kontaktteil (20, 21) durch Punktschweißung, Crimpen oder Löten elektrisch verbunden sind.

13. Becherkondensator nach einem der Ansprüche 7 bis 12, **dadurch gekennzeichnet, dass** die Kunststofffolien-Kondensatorwickel (10) aus mit einer Metallschicht versehenen Kunststofffolien, insbesondere metallisch bedampften Polypropylenfolien, hergestellt sind oder dass die Kunststofffolien-Kondensatorwickel (10) aus durch eine Kunststofffolie voneinander isolierten Metallfolien hergestellt sind.

## Claims

1. Contact part (20, 21) for electrically connecting end-face contact layers (12, 14) on the end faces of a plastic film capacitor winding (10) of an encased electric single-phase or three-phase capacitor comprising a terminal wire (18, 34, 44) or a connecting wire (42), comprising
- a preferably planar ring-shaped contact carrier (22) with a terminal region for making contact with a terminal wire (18, 34, 44) or a connecting wire (42), wherein the terminal region is a terminal lug (24), preferably in the plane of the contact carrier (22),
- at least one contact piece (26) which extends upwards or downwards substantially perpendicularly from the contact carrier (22) and has at least one contact tip (28) for producing an electrical connection to an end-face contact layer (12, 14) by the contact tip (28) being pushed into said end-face contact layer, and
- a penetration depth limitation device for limiting the penetration depth of the contact tip (28) or the contact tips (28) in the end-face contact layer (12, 14), wherein the penetration depth limitation device has a plurality of resting pieces (30) with resting areas (32), wherein furthermore the resting pieces (30) or some of said resting pieces are preferably provided equidistantly on the outer rim of the ring-shaped contact carrier (22) and extend upwards and/or downwards substantially perpendicularly uniformly therefrom or wherein the resting pieces (30) or some of said resting pieces are preferably provided equidistantly on the inner rim of the ring-shaped contact carrier (22) and extend upwards and/or downwards substantially perpendicularly uniformly therefrom.

2. Contact part (20) according to Claim 1, **characterized in that** at least one contact piece (26) extends upwards substantially perpendicularly from the contact carrier (22) and at least one contact piece (26) extends downwards substantially perpendicularly from the contact carrier (22).

3. Contact part (20) according to Claim 1 or 2, **characterized in that** a plurality of contact pieces (26) is preferably provided equidistantly on the outer edge of the ring-shaped contact carrier (22) and extends upwards or downwards substantially perpendicularly uniformly therefrom.

4. Contact part (20, 21) according to Claims 1 to 3, **characterized in that** a plurality of contact pieces (26) are preferably provided equidistantly on the inner edge of the ring-shaped contact carrier (22) and extend downwards or upwards perpendicularly uniformly therefrom.

5. Contact part (20, 21) according to one of the preceding claims, **characterized in that** the base material of said contact part is preferably metal with good electrical conductivity, preferably brass or copper.

6. Contact part (20, 21) according to Claim 5, **characterized in that** the base material has a tin plating.

7. Encased electric single-phase capacitor comprising a housing, a housing cover, a plastic film capacitor winding (10) which is arranged in the housing and whose end faces are each provided with an end-face contact layer (12, 14), and two terminal wires (18, 34) which are passed through the housing cover,
**characterized in that**
the terminal wires (18, 34) are electrically connected to the end-face contact layers (12, 14) via a respective contact part (20) according to one of the preceding claims, wherein the contact parts (20) are electrically connected to the respective end-face contact layer (12, 14) without the use of solder.

8. Encased electric three-phase capacitor comprising a housing, a housing cover, three plastic film capacitor windings (10), which are arranged one above the other in the housing, are delta-connected to one another and whose end faces are each provided with an end-face contact layer (12, 14), and three terminal wires (18, 34, 44) which are passed through the housing cover,
**characterized in that**
the terminal wires (18, 34, 44) are electrically connected to the corresponding end-face contact layer (12, 14) of the capacitor windings (10) via a respective contact part (20, 21) according to one of Claims 1 to 6, wherein the contact parts (20, 21) are electrically connected to the respective corresponding end-face contact layer (12, 14) without the use of solder.

9. Encased capacitor according to Claim 8, **characterized in that** in each case one (20) of the contact parts (20, 21) is provided on the end faces of the uppermost and lowermost capacitor windings, and in each case one (21) of the contact parts (20, 21) is provided between the capacitor windings for making contact with each of the two adjacent end-face contact layers (12, 14), and a connecting wire (42) for electrically connecting the uppermost contact part (20) to the lowermost contact part (20) is provided.

10. Encased capacitor according to Claim 9, **characterized in that** the connecting wire (42) is electrically connected to the uppermost and lowermost contact parts (20, 20) by spot welding, crimping or soldering.

11. Encased capacitor according to one of Claims 7 to 10, **characterized in that** the contact parts (20, 21) are at least partially pressed into the respective end-face contact layer (12, 14).

12. Encased capacitor according to one of Claims 7 to 11, **characterized in that** the terminal wires (18, 34, 44) are electrically connected to the respective contact part (20, 21) by spot welding, crimping or soldering.

13. Encased capacitor according to one of Claims 7 to 12, **characterized in that** the plastic film capacitor windings (10) are produced from plastic films provided with a metal layer, in particular metalized polypropylene films, or **in that** the plastic film capacitor windings (10) are produced from metal films which are insulated from one another by a plastic film.

## Revendications

1. Interface conductrice (20, 21) destinée à la connexion électrique de couches de contact frontales (12, 14) aux côtés frontaux d'un enroulement de condensateur à film plastique (10) d'un condensateur électrique monophasé ou triphasé doté d'un fil de raccordement (18, 34, 44) ou d'un fil de connexion (42), comprenant
- un support de contact (22) annulaire, de préférence plat, doté d'une zone de raccordement destinée à être en contact avec un fil de raccordement (18, 34, 44) ou un fil de connexion (42), dans laquelle la zone de raccordement est une languette de raccordement (24) de préférence dans le plan du support de contact (22),
- au moins une pièce de contact (26) essentiellement perpendiculaire au support de contact (22) s'étendant vers le haut ou vers le bas, dotée d'au moins une pointe de contact (28) destinée à créer une connexion électrique à une couche de contact frontale (12, 14) par enfoncement dans cette dernière de la pointe de contact (28) et
- un dispositif de limitation de profondeur de pénétration destiné à limiter la profondeur de pénétration de la ou des pointe(s) de contact (28) dans la couche de contact frontale (12, 14), dans laquelle le dispositif de limitation de profondeur de pénétration comporte plusieurs pièces de support (30) dotées de surfaces de support (32), dans laquelle en outre les pièces de support (30) ou une partie de celles-ci sont prévues pour être essentiellement équidistantes sur le rebord extérieur du support de contact annulaire (22) et s'étendent uniformément essentiellement vers le haut et/ou vers le bas de façon perpendiculaire ou dans laquelle en outre les pièces de support (30) ou une partie de celles-ci sont prévues pour être essentiellement équidistantes sur le rebord intérieur du support de contact annulaire (22) et s'étendent uniformément essentiellement vers le haut et/ou vers le bas de façon perpendiculaire.

2. Interface conductrice (20) selon la revendication 1, **caractérisée en ce qu'**au moins une pièce de contact (26) essentiellement perpendiculaire au support de contact (22) s'étend vers le haut et au moins une pièce de contact (26) essentiellement perpendiculaire au support de contact (22) s'étend vers le bas.

3. Interface conductrice (20) selon la revendication 1 ou 2, **caractérisée en ce que** plusieurs pièces de contact (26) sont prévues essentiellement équidistantes sur le rebord extérieur du support de contact annulaire (22) et s'étendent uniformément essentiellement vers le haut ou vers le bas de façon perpendiculaire.

4. Interface conductrice (20) selon l'une des revendications 1 à 3, **caractérisée en ce que** plusieurs pièces de contact (26) sont prévues essentiellement équidistantes sur le rebord intérieur du support de contact annulaire (22) et s'étendent uniformément essentiellement vers le haut ou vers le bas de façon perpendiculaire.

5. Interface conductrice (20, 21) selon l'une des revendications précédentes, **caractérisée en ce que** son matériau de base est un métal, de préférence bon conducteur électrique, de préférence du laiton ou du cuivre.

6. Interface conductrice (20, 21) selon la revendication 5, **caractérisée en ce que** le matériau de base comporte un revêtement d'étain.

7. Condensateur électrique monophasé doté d'un boîtier, d'un couvercle de boîtier, d'un enroulement de condensateur à film plastique (10) agencé dans le boîtier, dont les côtés frontaux sont prévus respectivement dotés d'une couche de contact frontale (12, 14), et de deux fils de raccordement (18, 34) passant au travers du couvercle de boîtier,
**caractérisé en ce que**
les fils de raccordement (18, 34) sont connectés électriquement aux couches de contact frontales (12, 14) chacun par le biais d'une interface conductrice (20) selon l'une des revendications précédentes, dans lequel les interfaces conductrices (20) sont connectées électriquement sans soudage aux couches de contact frontales (12, 14) respectives.

8. Condensateur électrique triphasé doté d'un boîtier, d'un couvercle de boîtier, de trois enroulements de condensateur à film plastique (10) agencés l'un sur l'autre dans le boîtier et montés en triangle, dont les côtés frontaux sont prévus respectivement dotés d'une couche de contact frontale (12, 14), et de trois fils de raccordement (18, 34, 44) passant au travers du couvercle de boîtier,
**caractérisé en ce que**
les fils de raccordement (18, 34, 44) sont connectés électriquement à la couche de contact frontale correspondante (12, 14) de l'enroulement de condensateur (10) chacun par le biais d'une interface conductrice (20, 21) selon l'une des revendications 1 à 6, dans lequel les interfaces conductrices (20, 21) sont connectées électriquement sans soudage à la couche de contact frontale (12, 14) correspondante.

9. Condensateur selon la revendication 8, **caractérisé en ce qu'**une (20) des interfaces conductrices (20, 21) est respectivement prévue sur la couche frontale des enroulements de condensateur supérieur et inférieur et qu'entre les enroulements de condensateur une (21) des interfaces conductrices (20, 21) est respectivement prévue pour créer un contact entre les deux couches de contact frontales (12, 14) voisines, de même qu'un fil de connexion (42) est prévu pour la connexion de l'interface conductrice supérieure (20) à l'interface conductrice inférieure (20).

10. Condensateur selon la revendication 9, **caractérisé en ce que** le fil de connexion (42) est connecté électriquement aux interfaces conductrices supérieure et inférieure (20, 20) par soudure par point, sertissage ou brasage.

11. Condensateur selon l'une des revendications 7 à 10, **caractérisé en ce que** les interfaces conductrices (20, 21) sont enfoncées au moins partiellement dans la couche de contact frontale (12, 14) respective.

12. Condensateur selon l'une des revendications 7 à 11, **caractérisé en ce que** les fils de raccordement (18, 34, 44) sont connectés électriquement à la couche de contact frontale (20, 21) respective par soudure par point, sertissage ou brasage.

13. Condensateur selon l'une des revendications 7 à 12, **caractérisé en ce que** les enroulements de condensateur à film plastique (10) sont produits à partir d'un film plastique doté d'une couche métallique, en particulier d'un film polypropylène traité par une vapeur métallique, ou **en ce que** les enroulements de condensateur à film plastique (10) sont produits à partir de feuilles métalliques isolées l'une de l'autre par un film plastique.
